# EUROPÄISCHE PATENTSCHRIFT

(11) **EP 0 677 147 B1**
(45) Veröffentlichungstag und Bekanntmachung des Hinweises auf die Patenterteilung: **27.05.1998**
(21) Anmeldenummer: 94929477.1
(22) Anmeldetag: 15.10.1994
(51) Int. Cl.: F02P 5/15, F02D 41/26, G05B 19/042

(54) **CONTROLLER IN EINEM RECHENWERK**
CONTROLLER IN AN ARITHMETIC UNIT
CONTROLEUR DANS UNE UNITE ARITHMETIQUE

(30) Priorität: 30.10.1993 DE 4337132
(43) Veröffentlichungstag der Anmeldung: 18.10.1995
(73) Patentinhaber: ROBERT BOSCH GMBH, 70442 Stuttgart (DE)
(72) Erfinder: EITRICH, Frank-Thomas, D-72760 Reutlingen (DE)
(86) Internationale Anmeldenummer: DE9401222
(87) Internationale Veröffentlichungsnummer: WO9512756

(56) Entgegenhaltungen:
- EP-A- 0 494 467
- DE-A- 3 820 279
- DE-A- 3 904 649
- DE-A- 4 004 516
- DE-A- 4 129 287
- GB-A- 2 256 504
- US-A- 5 229 949
- US-A- 5 233 964

## Beschreibung

### Stand der Technik

Die Erfindung betrifft einen Controller, insbesondere für Steuergeräte von Brennkraftmaschinen-Kraftstoffeinspritzungen und/oder Brennkraftmaschinen-Zündungen, zur Anordnung zwischen einem Prozessor und einer Steuerlogik gemäß der Gattung des Hauptanspruchs.

Controller der eingangs genannten Art sind bekannt. Sie dienen zum Beispiel der Durchführung von Steuerungsaufgaben. Bei umfangreichen Steuerungsaufgaben kann es zu beengten Adressierungsverhältnissen und einer Überbelastung des Prozessors kommen, die dazu führt, daß die Datenverarbeitung nicht in einem zur Verfügung stehenden Zeitintervall ausgeführt werden kann. Änderungen, die sich während der Berechnung von Daten ergeben und zu Datenänderungen führen würden, werden bei einer Überbelastung des Prozessors möglicherweise nicht mehr rechtzeitig berücksichtigt.

Aus der DE-PS 27 32 781 ist eine Einrichtung der eingangs genannten Art bekannt. Diese Einrichtung weist einen Mikroprozessor auf, der von der Ermittlung spezieller Signale entlastet ist, so daß er seine übrigen Aufgaben besser wahrnehmen kann.

Aus der EP 494 467 ist eine elektronische Kontrolleinheit mit einem ersten Rechner 10, einem zweiten Rechner 12 und einem zusätzlichen Controller 16 bekannt. Der erste Rechner 10 übernimmt dabei die Berechnung bestimmter Variablen während der zweite Prozessor 12 die zeitabhängige Signalerzeugung übernimmt. Die konkrete Umsetzung dieser Signale zur Steuerung der Einspritzung erfolgt dann durch den Controller 16.

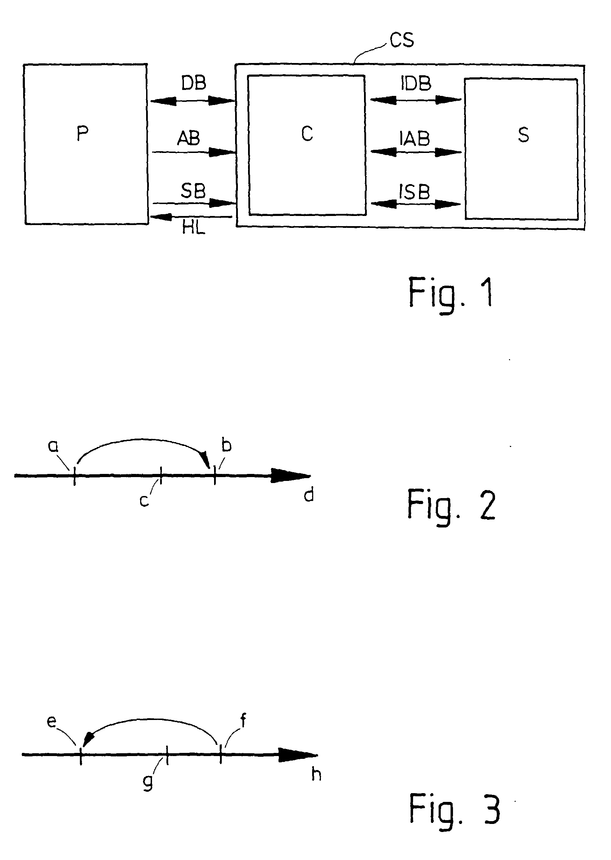

Aus der US 52 33 964 ist eine Motoreinspritzung bekannt, die einen Rechner 102 und eine injection-on/off logic 150 aufweist (siehe Figur 1). Die injection logic weist Speicherelemente, beispielsweise das Speicherelement für die Einspritzverzögerung 106E auf (siehe Figur 3b). Die gespeicherte delay Zeit wird beim Auftreten eines Ereignisses in einen Zähler 152 geladen der abwärts zählt. Wenn der Zähler den Zählerstand 0 erreicht wird eine Einspritzung ausgelöst.

Aus der GB 22 56 504 ist eine elektronische Steuereinheit mit zwei Rechnern bekannt, die sich gegenseitig kontrollieren.

Aus der DE 40 04 516 ist ein Verfahren zur Steuerung von Brennkraftmaschinen bekannt, bei dem zwei Rechner unabhängig voneinander und nach verschiedenen Bearbeitungsmethoden Informationen verarbeiten.

### Vorteile der Erfindung

Der erfindungsgemäße Controller mit den im Hauptanspruch genannten Merkmalen hat demgegenüber den Vorteil, daß der zwischen dem Prozessor und der Steuerlogik als Interface wirkender Controller zur Prozessorentlastung bestimmte Aufgaben des Prozessors übernimmt. Hierzu ist vorgesehen, daß zwischen dem Prozessor und der Steuerlogik Informationen übertragen werden, zu denen der Controller Zusatzinformationen generiert, auf die die Steuerlogik reagiert. Im Zuge dieser Anmeldung sind unter "Informationen" elektronische Dateninformationen zu verstehen, wobei es sich um Adressen und/oder Daten (Datum) handeln kann. Gemäß den vorstehenden Ausführungen übernimmt der Prozessor somit nur eine Teilarbeit; der andere Teil der Arbeit wird vom Controller übernommen. Werden vom Prozessor zur Steuerlogik Daten übertragen, die vom Controller nicht verändert werden, so arbeitet dieser Bereich in herkömmlicher Art und Weise, das heißt, es hat den Anschein, als wenn der Prozessor direkt mit der Steuerlogik verbunden ist. Hinzu kann jedoch der Umstand treten, daß der Controller zusätzliche Signale/Informationen erzeugt, die über einen Internen Bus, insbesondere einem Internen Steuerbus (ISB) zur Steuerlogik übertragen werden. Hierdurch erfolgt die Entlastung des Prozessors, da er nicht die gesamte Aufgabe übernimmt. Wie bereits vorstehend erwähnt, ist es zusätzlich oder alternativ auch möglich, daß zwischen dem Prozessor und der Steuerlogik Informationen übertragen werden, die den Controller passieren, wobei sie verändert werden. Insbesondere werden vom Prozessor zur Steuerlogik Daten übertragen, die beim Passieren des Controllers verändert werden, wobei die veranderten Daten über einen Internen Bus, insbesondere einen Internen Datenbus (IDB) vom Controller zur Steuerlogik gelangen. Alternativ oder zusätzlich ist es möglich, daß zwischen Prozessor und der Steuerlogik zu übertragende Informationen den Controller passieren, der die Informationen nach bestimmten Kriterien prüft und bei Nichterfüllung der Kriterien die Weiterleitung an die Steuerlogik verweigert. Mithin übernimmt der Controller Kontrollaufgaben, die nicht von dem Prozessor durchgeführt zu werden brauchen, was zu dessen Entlastung führt. Insbesondere ist vorgesehen, daß vom Prozessor zur Steuerlogik zu übertragende Daten den Controller passieren, der sie auf Konsistenz prüft und in Abhängigkeit des Prüfergebnisses die Weiterleitung der Daten an die Steuerlogik verweigert. Liegt die Konsistenz vor, das heißt, sind die für den relevanten Fall geltenden Kriterien erfüllt, so werden die Daten des Prozessors an die Steuerlogik übertragen. Sind bestimmte Bedingungen nicht erfüllt, so ist nicht der Prozessor das Bauteil, das die Überprüfung vornimmt, sondern der Controller, wobei der Prozessor die generierten Daten zwar auffindet, die jedoch aufgrund des blockierenden Controllers nicht zur Steuerlogik gelangen. Vorzugsweise ist für den Prozessor der Controller quasi "unsichtbar", daß heißt, der Prozessor bearbeitet zum Beispiel eine Steuerungsaufgabe und gibt Daten an die Steuerlogik ab, die jedoch zunächst zum Controller gelangen und dort gegebenenfalls verändert werden. Der Controller gibt die gegebenenfalls veränderten Daten dann an die Steuerlogik weiter. Die Arbeiten, die durch die Eingriffe des Controllers erledigt werden, müssen daher nicht von dem Prozessor durchgeführt werden, so daß dieser entlastet wird.

Zusätzlich oder alternativ werden dem Controller externe Informationen, zum Beispiel externe Informationen aus dem erwähnten Steuerprozeß, zugeleitet, die unabhängig vom Prozessor eine Kommunikation zwischen Controller und Steuerlogik auslösen können. Beispielsweise werden Prozeßparameter nicht dem Prozessor, sondern dem Controller zugeführt, so daß der Prozessor entlastet wird. Der Controller arbeitet diese Parameter beziehungsweise Änderungen vom Parameter selbstständig im Zusammenspiel mit der Steuerlogik ab, ohne daß dies der Prozessor "merkt".

Insbesondere können die externen Informationen auf dem Eintritt eines externen Ereignisses beruhen, wobei aufgrund des Eintritts des Ereignisses eine Datenkommunikation zwischen Controller und Steuerlogik erfolgt, die -wie gesagt- nicht zur Mitwirkung des Prozessors führt.

### Zeichnung

Die Erfindung wird im folgenden anhand der Figuren näher erläutert. Es zeigen:
- Figur 1: ein Blockschaltbild eines Rechenwerks,
- Figur 2: eine Veranschaulichung der Problematik von Startwert-Veränderungen,
- Figur 3: eine Veranschaulichung entsprechend der Figur 2,
- Figur 4: ein Blockschaltbild und
- Figur 5: ein weiteres Blockschaltbild.

### Beschreibung von Ausführungsbeispielen

Diese zeigen einen Controller, der einen Prozessor und eine Steuerlogik aufweist, wobei ein "Zusatzgerät" im microprozessor-gesteuerten System vorhanden ist, das als Interface zwischen Prozessor und Steuerlogik geschaltet ist und den Prozessor entlastende Aufgaben übernimmt. Die Zusammenschaltung von Controller und Steuerlogik wird im nachfolgenden als "Controllersystem" bezeichnet.

Gemäß Figur 1 wird vom Prozessor P aus das Controllersystem CS durch drei Leitungstypen gesteuert. Vom Prozessor P führt ein Adressbus AB zum Controllersystem CS. Ferner führt ein Steuerbus SB vom Prozessor P zum Controllersystem CS. Überdies ist eine Holdleitung HL vorgesehen, die vom Controllersystem CS zum Prozessor P führt und dazu dient, den Prozessor P anzuhalten, wenn das Controllersystem CS langsamer arbeitet. Ist die Aktion im Controllersystem CS abgearbeitet, so wird über die Holdleitung HL der Prozessor P aufgefordert, erneut dem Controllersystem CS Informationen zuzuführen. Schließlich ist der Prozessor P mit dem Controllersystem CS über einen bidirektionalen Datenbus DB verbunden.

Das Controllersystem CS besteht aus einem Controller C und einer Steuerlogik S. Controller C und Steuerlogik S sind mittels eines Internen Steuerbusses ISB und mittels eines bidirektionalen Internen Datenbusses IDB und eines bidirektionalen Adressbusses IAB miteinander verbunden.

Der Prozessor P kommuniziert mit dem Controllersystem CS entweder mit einem READ-Befehl oder einem WRITE-Befehl oder einem READMODIFYWRITE-Befehl. Im READ-Betrieb gibt der Prozessor P eine Adresse an den Adressbus AB und signalisiert über den Steuerbus SB den READ-Befehl. Der Controller C setzt ein HOLD-Signal, um den Prozessor P anzuhalten. Diese Aktion kann auch unterbleiben, wenn der Controller C aufgrund der gewählten Adresse dem Prozessor P damit mitteilt, daß der Controller C die gewünschte READ-Aktion schnell genug erledigen kann, der Controller C prinzipiell schnell genug ist, oder wenn aus der Adresse ersichtlich ist, daß der Controller C nicht adressiert wurde. Der Controller C adressiert mit der erhaltenen Adresse das gewünschte Register, das sich entweder in den Controller C oder in der Steuerlogik S befinden kann. Der Controller C übergibt die Daten aus dem Register über den Datenbus DB an den Prozessor P. Nach erfolgter Datenübergabe wird das HOLD-Signal zurückgenommen, um den Prozessor P weiterarbeiten zu lassen.

Im WRITE-Betrieb gibt der Prozessor P eine Adresse an den Adressbus AB und signalisiert uber den Steuerbus SB den WRITE-Befehl. Gleichzeitig gibt der Prozessor P die Daten auf den Datenbus DB. Der Controller C adressiert mit der erhaltenen Adresse das gewünschte Register, und übergibt die Daten vom Datenbus DB diesem Register, das sich in dem Controller C oder in der Steuerlogik S befinden kann.

Im READMODIFYWRITE-Betrieb gibt der Prozessor P eine Adresse an den Adressbus AB und signalisiert über den Steuerbus SB den READ-Befehl. Gleichzeitig adressiert der Controller C mit der erhaltenen Adresse das gewünschte Register, das sich wiederum entweder im Controller C oder in der Steuerlogik befinden kann und übergibt die Daten aus dem Register über den Datenbus DB an den Prozessor P. Der Prozessor P bearbeitet die so erhaltenen Daten des Datenbusses DB. Der Prozessor P signalisiert über den Steuerbus SB den WRITE-Befehl. Gleichzeitig gibt der Prozessor P die neubearbeiteten Daten auf den Datenbus DB. Der Controller C adressiert mit der erhaltenen Adresse das gewünschte Register und übergibt die Daten vom Datenbus DB diesem Register.

Es ist nach einem anderen Ausführungsbeispiel auch möglich, Zwischenschritte vorzusehen. Die Adressierung der Steuerlogik S ist stets eine vom Prozessor P vorgegebene Adresse, wobei diese jedoch über mehrere Schritte und über mehrere Zwischenspeicherungen einer Teiladresse in einem Adress-Zusatz-Register erfolgen kann.

Bei der Erfindung ist vorgesehen, daß
a) Daten vom Prozessor P zur Steuerlogik S in unveränderter Form gelangen, wobei jedoch zusätzliche Signale auf dem Internen Steuerbus ISB generiert werden, auf die die Steuerlogik S reagiert,
b) die Daten werden inhaltlich verandert, das heißt, der Steuerlogik S werden über den Internen Datenbus IDB vom Controller C korrigierte Daten übermittelt,
c) die Daten vom Prozessor P werden vom Controller C auf Konsistenz geprüft und gegebenenfalls die Weiterleitung an die Steuerlogik S verweigert,
d) externe Ereignisse, die an den Controller C geleitet werden, können unabhängig vom Prozessor P eine Datenkommunikation zwischen Controller C und Steuerlogik S auslösen.

Zu dem Fall a soll ein Ausführungsbeispiel folgen. Zunächst sei auf folgende Einsatzmöglichkeit des erfindungsgemäßen Rechenwerks eingegangen. Es kann beispielsweise verwendet werden, um in Steuergeräten von Brennkraftmaschinen Aufgaben zu übernehmen. Es ist möglich, mit Hilfe des erfindungsgemäßen Rechenwerks eine Ansteuerung, Unterstützung und Vereinfachung von elektronischen Schaltungen für Kraftfahrzeug-Einspritz- und/oder Kraftfahrzeug-Zündungssteuerungen durchzuführen. Ferner eignet sich der Gegenstand der Erfindung auf einfache Weise zum Testen der elektronischen Schaltungen.

Bei den genannten Einspritzungs- und Zündungsaufgaben ist es notwendig, einen vorgegebenen Wert (Startwert oder Auslösewert genannt) mit einen sich inkremental ändernden Timerwert zu vergleichen. Im konkreten Fall Einer Kraftfahrzeug-Steuerung wird eine Systemreaktion von der Winkelstellung der Nokkenwelle abhängig gemacht. Die sich im Betrieb verändernde Winkelstellung der Nockenwelle stellt den genannten Timerwert dar. Nachstehend soll auf den Start und das Ende einer Einspritzung eingegangen werden. Die Bewegungsrichtung des Winkels, also die Winkelstellung der Nockenwelle, erfolgt nur in einer Richtung, das heißt, daß der Winkelwert stets nur zunehmen kann und daß sich der Wertebereich zyklisch wiederholt. Sind 359° durchlaufen wird der Winkel auf 360° inkrementiert, wobei der dem Winkel zugeordnete Winkelwert auf den Wert 0° zurückspringt. Aufgrund der Zyklizität ist eine Beschreibung eines größeren und eines kleineren Winkelwerts gleichbedeutend mit den Bezeichnungen "später" und "früher". So kann eine Einspritzung bei 350° begonnen und bei 20° beendet werden, wobei der Startwert "größer" als der Endwert der Einspritzaktion ist. Eine wichtige Voraussetzung der Verwendung der digitalen Vorgabe eines zyklischen Winkels (Timerwert beziehungsweise Winkeluhr = Winkelstellung der Nokkenwelle) ist die inkrementale Veränderung des Wertes. Dies bedeutet, daß bei jeder Veränderung der Winkeluhrwert alle dazwischen liegenden Werte in aufsteigender Reihenfolge annehmen muß.

Eine Aktion der Steuereinheit ist dann vorzunehmen, wenn ein vorgegebener, gespeicherter "Auslösewert" mit dem Wert der Winkeluhr (Winkelstellung der Nokkenwelle) übereinstimmt. Zu beachten ist jedoch, daß eine Veränderung des Auslösewertes nicht gleichzeitig mit der Veränderung der Winkeluhr geschehen darf. Hierzu wird auf die Figur 2 verwiesen. In dieser bedeuten: a = vorheriger auslösender Wert (Auslösung bereits erfolgt), b = neuer auslösender Wert, c = aktueller Ist-Wert und d = inkrementales Ereignis (Timer). Soll zur Vorverlegung des Einspritzstarts ohne Verwendung eines Controllers C der Auslösewert von zum Beispiel 25° auf 24° reduziert werden, darf nicht gleichzeitig der Winkeluhrwert von 24° auf 25° erhöht werden. In einem solchen Falle kann das Rechenwerk im Steuerwerk S keine Übereinstimmung der Werte feststellen und die vorgesehene Aktion "Einspritzung" entfällt.

Aus dem gleichen Grunde kann eine Veränderung des Auslösewertes nicht ohne Kenntnis des aktuellen Winkeluhr-Standes vorgenommen werden (vergleiche Figur 3). In Figur 3 bedeuten: e = neuer auslösender Wert (Identität erfolgt nicht mehr), f = vorheriger auslösender Wert, g = aktueller Ist-Wert und h = inkrementales Ereignis (Timer). Soll zur Vorlegung des Einspritzstarts ohne Verwendung eines Controllers C der Auslösewert von zum Beispiel 25° auf 20° reduziert werden, darf nicht gleichzeitig der Winkeluhrwert in den Bereich von 21° bis 24° liegen, da auch in diesem Falle keine Werteübereinstimmung festgestellt werden kann, so daß es zu einem "Überspringen" des Winkeluhrwertes kommt.

Zur Lösung der vorstehenden Problematik der Startwert-Veränderung bei der Kraftstoffeinspritzung einer Brennkraftmaschine müssen dem Controller C die aktuellen Ist-Werte der "Winkeluhr" (Winkelstellung der Nockenwelle) bekannt sein. Dies erfolgt vorzugsweise dadurch, daß die Generation der Winkeluhr entweder im Controller C erfolgt oder daß eine entsprechende Information über den Stand der Winkeluhr einem Eingang des Controllers C zugeführt wird. Der Prozessor P gibt einen Auslösewert vor, daß heißt, den Startwert für den Beginn der Einspritzung. Der Prozessor P schreibt diesen neuen Auslösewert als Startwert in die Steuerlogik S. Der Controller C detektiert aufgrund der Adresse die Tatsache, daß es sich um einen Auslösewert handelt und schreibt diesen neuen Auslösewert in einen Zwischenspeicher. Gleichzeitig liest der Controller C mit der unveränderten Adresse den alten Auslösewert, der bisher gegolten hat. Aufgrund der Differenz zwischen den Daten des neuen Auslösewerts, des alten Auslösewerts und der momentan vorliegenden Stellung der Winkeluhr wird ermittelt, ob es sich um den Fall der Figur 2 oder den Fall der Figur 3 oder um keinen der beiden Fälle handelt. Diese Zusatzinformation wird zusammen mit dem zwischengespeicherten neuen Auslösewert von Controller C dem Steuerwerk S übersandt, so daß dieses eine Einspritzung auslösen kann (Fall 2, Fig.3) oder ein Kennzeichen setzt, das die nächste Auslösung zu ignorieren ist, da sie bereits erfolgte (Fall 1, Fig.2). Aus dem vorstehenden wird deutlich, daß Daten des Prozessors P zur Steuerlogik S in zwar unverändeter Form übertragen werden, wobei jedoch zusätzliche Signale generiert werden, auf die die Steuerlogik reagiert.

Die nachstehende Tabelle gibt für die verschiedenen Fälle die jeweilige Reaktion des Rechenwerks wieder.

| Vergleiche: | | | Reaktion: |
|---|---|---|---|
| Neuer_Startwert ? Alter_Startwert | Neuer_Startwert ? Winkeluhr | Alter_Startwert ? Winkeluhr | |
| = | egal | egal | Fall 0 |
| > | = | < | Fall 3 |
| > | > | = | Fall 1 |
| > | > | > | Fall 3 |
| > | > | < | Fall 1 |
| > | < | egal | Fall 3 |
| < | = | > | Fall 2 |
| < | > | egal | Fall 3 |
| < | < | = | Fall 3 |
| < | < | > | Fall 2 |
| < | < | < | Fall 3 |
| Fall 0: Keine Reaktion, Neuer Wert braucht nicht an Steuerlogik übergeben zu werden. | | | |
| Fall 1: Steuerlogik bekommt neben dem Neuen Wert den Hinweis, daß die Auslösung bereits erfolgt ist, um eine Zweit auslösung zu unterbinden, vgl. Fig. 2. | | | |
| Fall 2: Steuerlogik bekommt neben dem Neuen Wert die Anweisung, auszulösen, vgl. Fig. 3. | | | |
| Fall 3: Keine zusätzliche Reaktion während Neuer Wert an Steuer logik übergeben wird. | | | |

Anhand des vorstehend erwähnten Beispiels der Kraftstoffeinspritzung einer Brennkraftmaschine soll auf den Fall b eingegangen werden, bei dem das erfindungsgemäße Rechenwerk Daten inhaltlich verändert, das heißt, der Steuerlogik S werden über den Internen Datenbus IDB vom Controller C korrigierte Daten übermittelt. Es gelten die gleichen Voraussetzungen, wie im Beispiel zu a erwähnt. Jetzt sei angenommen, daß der Prozessor P einen neuen Auslösewert in die Steuerlogik S einschreibt. Der Controller C detektiert aufgrund der Adresse die Tatsache, daß es sich um einen Auslösewert handelt und schreibt diesen neuen Auslösewert in einen Zwischenspeicher. Gleichzeitig liest der Controller C mit der unveränderten Adresse den vorherigen, alten Auslösewert in einen zweiten Zwischenspeicher. Aufgrund der Differenz zwischen den Daten wird ermittelt, ob der neue Auslösewert größer oder kleiner als der alte Auslösewert ist. Anstelle eines einzigen Schreibvorgangs in die Steuerlogik S wird der alte Auslösewert durch inkrementale Schritte dem neuen Auslösewert angeglichen, indem eine entsprechende Anzahl nacheinander erfolgende Schreibvorgange vom Controller C zur Steuerlogik S generiert werden, deren Daten sich jeweils um den Wert 1 dem gewünschten neuen Auslösewert annähern.

Zur Durchführung einer relativen Datenveränderung, das heißt der Angabe der Veränderung eines Datums, schreibt der Prozessor P die gewünschte Veränderung des Auslösewerts in die Steuerlogik S und kennzeichnet diesen Wert als Relativwert, entweder durch die Verwendung einer modifizierten Adresse oder durch das Setzen eines festgelegten Bits des Datums (der Daten). Der Controller C speichert diesen neuen relativen Auslösewert in einem Zwischenspeicher. Gleichzeitig liest der Controller C mit der unveränderten beziehungsweise rückmodifizierten Adresse den alten Auslösewert in einen zweiten Zwischenspeicher. Die Summe von altem Auslösewert und neuem Auslösewert wird ermittelt und mit der unveränderten beziehungsweise rückmodifizierten Adresse der Steuerlogik S zurückgeschrieben. Durch Übermittlung des Relativwertes "-2" initiert der Prozessor P so eine Reduktion eines Auslösewertes um zwei Einheiten ohne Kenntnis des aktuellen Auslösewertes.

Dieser Vorgang kann auch vom Prozessor P realisiert werden, der dafür allerdings einige Programmschritte benötigt und deshalb einige Zeit erfordert. Dies beinhaltet aber die Möglichkeit, daß sich Bedingungen (zum Beispiel die Position der Winkeluhr) während der Rechenzeit ändern können, wodurch entweder die Reaktion ungenau wird oder das Programm zur Abdeckung aller möglichen Fälle groß und unübersichtlich, in jedem Falle jedoch die Abarbeitung zeitintensiv werden läßt.

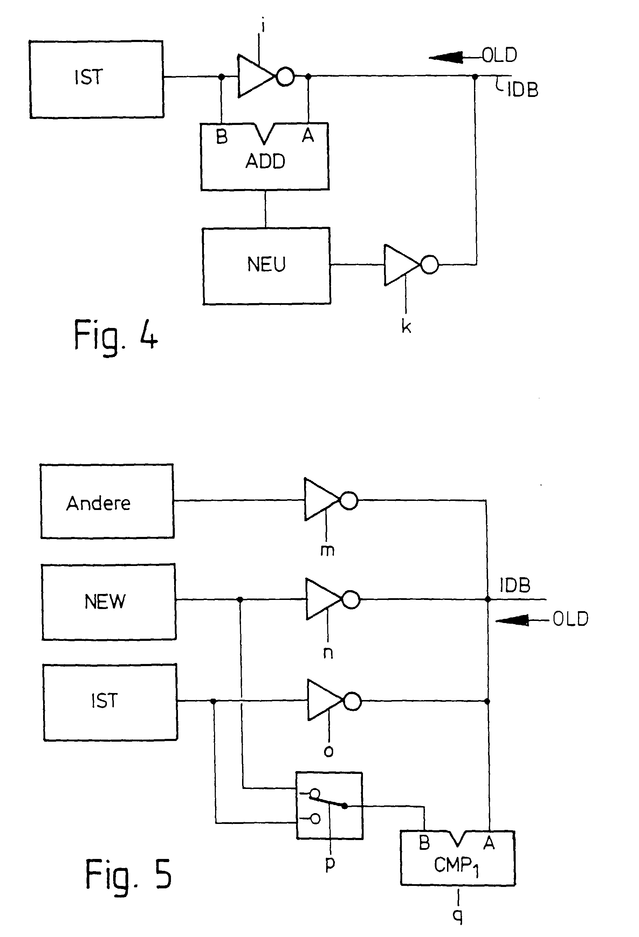

Im Hinblick auf die Möglichkeit, relative Veränderungen von Daten zu verarbeiten, wird auf die Figur 4 verwiesen. Hierin bedeuten i = Schreibe den IST-Wert und k = Schreibe den NEW-Wert. Ist eine Umwandlung von relativen in absolute Daten erlaubt, so wird der vorherige Registerwert OLD gelesen und mit einem derzeitig geltenden Registerwert IST addiert. Diese Addition erfolgt im Addierer ADD. Durch parallel gelesene Statusbits kann an dieser Stelle noch nachträglich in den Controllerablauf eingegriffen werden. Die gebildete Summe NEU wird gespeichert und im nächsten Schritt als absolutes Datum mit einem Schreibbefehl über den Internen Datenbus IDB an die Steuerlogik S zurückgegeben.

Ist eine Umwandlung von relativen in absolute Daten nicht erlaubt, so erfolgt -gemäß Figur 4- ein Schreibbefehl mit den Daten IST an die Steuerlogik S.

In Figur 5 wird auf Registerveränderungen, also beispielsweise auf eine Auslösewert-Veränderung beim Einspritzvorgang von Kraftstoff eingegangen. Bei der Veränderung eines Registerwertes prüft der Controller C seine Reaktion mit maximal vier Abfragen: Zunächst entscheidet er anhand der Registeradresse, ob es sich hierbei um ein Auslösewert-Register handelt. In diesem Falle wird der vorherige Startwert OLD gelesen und einerseits mit dem neuen Wert NEU, andererseits mit dem aktuellen IST-Wert IST verglichen. Als letzter Vergleich erfolgt die Differenzbildung zwischen IST und NEU. Anhand der Ergebnisse dieser drei Vergleiche wird ermittelt, ob beispielsweise ein "Überspringen" gemäß der Figuren 2 und 3 vorliegt. Der Steuerlogik S werden parallel die neuen Daten NEW übersandt. Die Reaktion darauf bleibt der Steuerlogik S überlassen. In Figur 5 bedeuten: m = Schreibe Andere, n = Schreibe NEW-Wert, o = Schreibe IST-Wert, p = Schalter und q = Ergebnisspeicher (z.B. Schieberegister).

Nachstehend ein Ausführungsbeispiel zum Fall c, das heißt, zur Prüfung der Daten auf Konsistenz. Für eine Verweigerung inkonsistenzer Daten muß dem Controller C der Toleranzbereich bekannt sein. Die Kenntnis dieses Toleranzbereichs sei angenommen. Der Prozessor P schreibt einen neuen Auslösewert in die Steuerlogik S. Der Controller C detektiert aufgrund der Adresse die Tatsache, daß es sich um einen Auslösewert handelt und schreibt diesen Wert als neuen Auslösewert in einen Zwischenspeicher. Gleichzeitig liest der Controller C mit der unveränderten Adresse den alten Auslösewert in einen zweiten Zwischenspeicher ein. Aufgrund der Differenz zwischen den Daten wird ermittelt, ob der neue Auslösewert größer oder kleiner als der alte Auslosewert ist. Der Controller C überprüft, ob sich der neue Auslösewert im definierten Toleranzbereich befindet und/oder ob die Differenz zwischen dem neuen Auslösewert und dem alten Auslösewert in einem definierten zulässigen Bereich liegt. Nur wenn diese Bedingungen zutreffen, wird der neue Auslösewert vom Controller C an die Steuerlogik S weitergeleitet.

Im Falle der Verwaltung der Winkeluhr, erhält der Controller C ein Register "Winkeluhr" und teilt jede Änderung der Winkeluhr explizit der Steuerlogik S mit. Der Prozessor P löst einen Vorgang "Inkrementiere die Winkeluhr" aus, der den Inhalt des Registers "Winkeluhr" um einen Wert erhöht. Nach dieser Erhöhung wird der Wert des Registers "Winkeluhr" über den Internen Datenbus IDB an die Steuerlogik S gesandt, während eine spezifische Kombination von Daten auf dem Internen Adressbus IAB und/oder dem Internen Steuerbus ISB diesen Vorgang kennzeichnet. Die Steuerlogik S kann dann den Wert der Winkeluhr mit den eigenen Daten vergleichen und entsprechende Reaktionen auslösen.

Zum Fall d, nämlich externe Ereignisse, die an den Controller C geleitet werden, wobei unabhängig vom Prozessor P eine Datenkommunikation zwischen Controller C und Steuerlogik S ausgelöst werden kann, sei folgendes Beispiel aufgezeigt. Im Falle einer automatischen Verwaltung der Winkeluhr erhält der Controller C ein Register "Winkeluhr" und teilt jede Änderung der Winkeluhr explizit der Steuerlogik S mit. Ein externes (Takt-)Ereignis löst einen Vorgang "Inkrementiere die Winkeluhr" aus, das der Inhalt des Registers "Winkeluhr" um einen Wert erhöht. Nach dieser Erhöhung wird der Wert des Registers "Winkeluhr" über den Internen Datenbus IDB an die Steuerlogik S gesandt, während eine spezifische Kombination von Daten auf dem Internen Adressbus IAB und/oder dem Internen Steuerbus ISB diesen Vorgang kennzeichnet. Die Steuerlogik S kann dann den Wert der Winkeluhr mit den eigenen Daten vergleichen und entsprechende Reaktionen auslösen.

In einem weiteren Beispiel des Testfalles der Steuerlogik erhält der Controller ein Datenfeld (ReadOnlyMemory ROM), das ein Programm enthält und Angaben über das Soll-Verhalten der Steuerlogik umfaßt. Ein externes (Test-)Ereignis oder der Prozessor P löst einen Vorgang "Start Testprogramm" aus; der Controller C arbeitet das im Datenfeld vorhandene Programm ab und vergleicht jeweils das auf den Internen Bussen IAB, IDB und ISB ersichtliche Soll-verhalten der Steuerlogik mit den gespeicherten Daten. Im Falle einer nicht vorhergesehenen Reaktion wird entweder ein Fehlerbit in einem Statusregister des Controllers C gesetzt, oder das Testprogramm abgebrochen, oder das Fehlverhalten protokolliert. Der Prozessor P kann somit das korrekte Verhalten der Steuerlogik S ohne eigene Aktivität prüfen. Es kann sich bei dem Testprogramm um ein Programm handeln, das mehrfach vorhandene und nur durch die Adresse unterschiedliche Steuerlogiken entweder parallel oder durch Mehrfach-Aufruf des Testprogramms hintereinander prüft. Im ersten Fall wird vom Controller C über den Internen Steuerbus ISB ein Teil der Adresse auf dem Internen Adressbus IAB als unwirksam gekennzeichnet (Alternative: Die Steuerlogiken reagieren auf zwei Adressen identisch, die zweite Adresse ist bei allen Steuerlogiken gleich), im zweiten Fall wird die im Testprogramm vorhandene Adresse durch ein im Controller C abgespeichertes Datum zur eigentlichen Steuerlogik-Adresse für den Internen Adressbus IAB ergänzt. Es ist auch denkbar, beide Fälle alternativ zu realisieren.

Nachfolgend soll auf ein Rechenwerk eingegangen werden, das die Zündungssteuerung bei einer Brennkraftmaschine vornimmt. Im Falle der Zündungssteuerung sei angenommen, daß eine Zündung bei dem Winkel αb durch Schalten eines Zündtransistors beginnt und bei einem Winkel αe durch Abschalten dieses Zündtransistors und der Generation des Zündfunkens endet.

Der eingesetzte Controller C besitzt mehrere, vorzugsweise acht, gleichartige Steuerlogiken, die verwaltet werden. Jede dieser Steuerlogiken enthält vier Register, zwei davon als "Startregister". Der Controller C enthält außerdem acht eigene Register, darunter zwei Winkeluhren, eine davon extern vorgegeben und die andere intern erzeugt.

Die vorstehend genannten Winkel αb und αe stehen in zwei Startregistern der Steuerlogik S. Die Steuerlogik S weist ferner ein Statusregister auf, in dem folgende Angaben stehen:
- ob eine Zündungssteuerung gemacht werden soll,
- welche der beiden Winkeluhren verwendet werden soll,
- ob eine Zündungslängen-Kontrolle vorgenommen werden soll,
- ob eine Kontrolle der Startwert-Veranderungen vorgenommen werden soll.

Der Controller C enthält zwei Angaben zur Steuerung von Zündungslangen in den Registern "MinimumZeit" und "MaximumZeit".

Der Controller C hat über zwei Leitungen des Internen Steuerbusses ISB die Fallunterscheidung zur Startwert-Veränderung realisiert. Er sendet bei jeder Winkeluhr-Änderung den neuen Winkeluhr-Wert unter einer IAB-Winkeluhr-Adresse über den Internen Datenbus IDB. Durch den nur einseitig belegbaren Internen Datenbus IDB können Winkeluhr und Startregister aus Sicht der Steuerlogik S nicht gleichzeitig verändert werden. WRITE-Daten vom Prozessor P an ein Startregister werden vom Controller C abgefangen. Der Controller C liest sowohl den bisherigen Wert des Startregisters als auch den Inhalt des Statusregisters der betreffenden Steuerlogik. Wird durch dieses die Kontrolle der Startwert-Veränderungen behindert, schreibt der Controller C die WRITE-Daten sofort an das Startregister. Andernfalls ermittelt er aus den gelesenen Werten und der ausgewählten Winkeluhr die Reaktion der Steuerlogik S und übermittelt diese Angabe zusammen mit den WRITE-Daten des Startregisters S gemäß Fall a). Die Auslösung einer Zündung wird durch die Detektion vom Startregister 1 = Winkeluhr durch Einschalten des Zündtransistors vorbereitet und durch die Detektion von Startregister 2 = Winkeluhr durch Ausschalten des Zündtransistors und Erzeugen des Zundfunkens beendet. Ist durch das Steuerlogik-Statusregister die Kontrolle der Zundungslangen gefordert, wird nach Auslösung einer Zündung durch die Detektion von Startregister 1 = Winkeluhr durch Einschalten des Zündtransistors durch eine Leitung des Internen Statusbusses ISB der Controller C von der Steuerlogik S aufgefordert, den Wert "Minimum-Zeit" auf den Internen Datenbus IDB auszugeben. Dieser Wert wird in einem internen Timer der Steuerlogik gespeichert und mit einem über den Internen Steuerbus ISB übermittelten Zähltakt auf Null dekrementiert. Solang dieser Timer ungleich Null ist, wird zur Gewährleistung eines Zündvorgangs der Zündtransistor nicht ausgeschaltet, auch wenn eine Detektion "Startregister 2" = Winkeluhr erfolgt. Ist diese Detektion erfolgt, wird der Zündtransistor ausgeschaltet und damit der Zündfunken erzeugt, sobald der Timer den Wert Null erreicht. Ist diese Detektion nicht erfolgt, fordert die Steuerlogik S nach Ablauf des Timers den Controller C über eine weitere Leitung des Internen Statusbusses ISB auf, den Wert "MaximumZeit" auf den Internen Datenbus IDB auszugeben. Dieser Wert wird ebenfalls in dem Timer gespeichert und auf Null dekrementiert. Eine Detektion "Startregister 2" = Winkeluhr schaltet den Zündtransistor zur Erzeugung eines Zündfunkens ab und hält den Timer an. Die Summe von MinimumZeit + MaximumZeit - Timerwert kann der Prozessor errechnen und erhält damit im Bedarfsfall die genaue Länge der Zündtransistor-Aktivität. Erreicht der Timer den Wert Null, wird der Zündtransistor in jedem Fall zum Schutz vor Überlastung ausgeschaltet.

Bei der Realisierung einer Einspritzungssteuerung wird wie folgt vorgegangen:

Eine Einspritzung beginnt mit dem Winkel αb durch Einschalten eines Einspritzventils und endet nach einer Einspritzzeit t durch Ausschalten dieses Ventils. Winkel und Einspritzzeit t stehen in den beiden Startregistern. In dem Statusregister der Steuerlogik S stehen noch folgende Angaben:
- ob eine Einspritzungssteuerung gemacht werden soll,
- welche der beiden Winkeluhren verwendet werden soll,
- ob eine Kontrolle der Startwert-Veränderungen vorgenommen werden soll.

Der Controller C hat über zwei Leitungen des Internen Steuerbusses ISB die Fallunterscheidung zur Startwert-Veränderung realisiert. Er sendet bei jeder Winkeluhr-Änderung den neuen Winkeluhrwert unter einer IAB-Winkeluhr-Adresse über den Internen Datenbus IDB. Durch den nur einseitig belegbaren Internen Datenbus IDB können Winkeluhr und Startregister aus Sicht der Steuerlogik S nicht gleichzeitig verändert werden. WRITE-Daten vom Prozessor P an ein Startregister werden vom Controller C abgefangen. Der Controller C liest sowohl den bisherigen Wert des Startregisters als auch den Inhalt des Statusregisters der betreffenden Steuerlogik S. Wird durch dieses die Kontrolle der Startwert-Veränderungen verhindert oder die Adressierung von Startregister 2 bei Einspritzungssteuerung erkannt, schreibt der Controller C die WRITE-Daten sofort in das Startregister. Andernfalls ermittelt er aus den gelesenen Werten und der ausgewählten Winkeluhr die Reaktion der Steuerlogik S und übermittelt diese Angabe zusammen mit den WRITE-Daten des Startregisters S. Die Auslösung einer Einspritzung wird durch die Detektion von Startregister 1 = Winkeluhr dadurch begonnen, daß die Steuerlogik S den Wert des Startregisters 2 (das heißt die Einspritzzeit t) in einen internen Timer der Steuerlogik kopiert, der mit einem über den Internen Steuerbus ISB gesendeten Zähltakt dekrementiert wird. Solange der Timer einen Wert ungleich Null enthält, wird beziehungsweise bleibt das Einspritzventil eingeschaltet. Wird eine erneute Auslösung einer Einspritzung durch die Detektion von Startregister 1 = Winkeluhr detektiert, während die vorherige Einspritzung noch aktiv ist, wird der Wert des Startregisters 2 erneut in den Timer kopiert, das Ventil bleibt eingeschaltet. Auf diese Weise kann eine Dauer-Einspritzung realisiert werden. Wird der Timer während einer Einspritzung durch den Prozessor P beziehungsweise Controller C durch einen WRITE-Befehl verändert, dient dieser zum Verlängern beziehungsweise Verkürzen (bis auf Sofortabbruch beim Einschreiben einer Null) der Einspritzung. Wird der Timer außerhalb einer Einspritzung durch den Prozessor P beziehungsweise Controller C durch einen WRITE-Befehl von Null auf einen Wert ungleich Null verändert, dient dieses zur Nachspritzung von Kraftstoff bei großen Lastveränderungen (zum Beispiel plötzliches Vollgas) durch erneutes Einschalten des Einspritzventils.

## Patentansprüche

1. Controller (C) zur Anordnung zwischen einem Prozessor (P) und einer Steuerlogik (S), wobei von der Steuerlogik (S) in Abhängigkeit von einem gespeicherten Auslösewert eine Aktion auslösbar ist, wobei vom Prozessor (P) zum Controller (C) eine Information über einen neuen Auslösewert übergebbar ist, dadurch gekennzeichnet, daß die Steuerlogik (S) den in der Steuerlogik (S) gespeicherten Auslösewert mit einem sich inkremental ändernden Timerwert vergleicht und bei einer Übereinstimmung von Auslösewert und Timerwert die Aktion auslöst, daß der Controller (C) den neuen Auslösewert, den gespeicherten Auslösewert und den Timerwert miteinander vergleicht, daß der Controller (C) nach dem Vergleich der Steuerlogik (S) den neuen Auslösewert zur Speicherung als Auslösewert übergibt, und daß der Controller (C) in Abhängigkeit vom Vergleich Zusatzinformationen an die Steuerlogik (S) übergibt.

2. Controller (C) nach Anspruch 1, dadurch gekennzeichnet, daß die Zusatzinformation die Steuerlogik (S) dazu veranlaßt die Aktion sofort auszulösen.

3. Controller (C) nach Anspruch 1, dadurch gekennzeichnet, daß die Zusatzinformation die Steuerlogik (S) dazu veranlaßt bei der nächsten Übereinstimmung die Aktion nicht auszulösen.

4. Controller (C) nach Anspruch 1 bis Anspruch 3, dadurch gekennzeichnet, daß die Information über den neuen Auslösewert aus dem Auslösewert besteht.

5. Controller (C) nach Anspruch 1 bis Anspruch 3, dadurch gekennzeichnet, daß die Information über den neuen Auslösewert aus einem Relativwert besteht und daß der Controller (C) den neuen Auslösewert durch Auswertung des Relativwerts und des gespeicherten Auslösewerts ermittelt.

6. Controller (C) nach einem der vorhergehenden Ansprüche, dadurch gekennzeichnet, daß der Controller (C) beim Vergleich den neuen Auslösewert daraufhin überprüft ob der neue Auslösewert in einem vorgegebenen Toleranzbereich liegt, und daß der Controller (C) den neuen Auslösewert nur dann zur Speicherung an die Steuerlogik (S) weitergibt, wenn der neue Auslösewert in dem vorgegebenen Toleranzbereich liegt.

## Claims

1. Controller (C) to be arranged between a processor (P) and a control logic device (S), the control logic device (S) being capable of initiating an action depending on a stored initiation value, it being possible for information about a new initiation value to be transferred from the processor (P) to the controller (C), characterized in that the control logic device (S) compares the initiation value stored in the control logic device (S) with an incrementally changing timer value and initiates the action when the initiation value corresponds with the timer value, in that the controller (C) compares the new initiation value, the stored initiation value and the timer value with one another, in that, after the comparison by the control logic device (S), the controller (C) transfers the new initiation value for storage as initiation value, and in that the controller (C) transfers additional information to the control logic device (S) as a function of the comparison.

2. Controller (C) according to Claim 1, characterized in that the additional information causes the control logic device (S) to initiate the action immediately.

3. Controller (C) according to Claim 1, characterized in that the additional information causes the control logic device (S) not to initiate the action when the next correspondence occurs.

4. Controller (C) according to Claim 1 to Claim 3, characterized in that the information about the new initiation value consists of the initiation value.

5. Controller (C) according to Claim 1 to Claim 3, characterized in that the information about the new initiation value consists of a relative value, and in that the controller (C) determines the new initiation value by evaluating the relative value and the stored initiation value.

6. Controller (C) according to one of the preceding claims, characterized in that, during the comparison, the controller (C) checks the new initiation value to determine whether the new initiation value lies in a predetermined tolerance band, and in that the controller (C) passes on the new initiation value to the control logic device (S) for storage only when the new initiation value lies in the predetermined tolerance band.

## Revendications

1. Contrôleur (C) destiné à être monté entre un processeur (P) et une logique de commande (S), la logique de commande (S) déclenchant une action en fonction d'une valeur de déclenchement mise en mémoire, le processeur (P) pouvant transmettre au contrôleur (C) une information relative à une nouvelle valeur de déclenchement,
caractérisé en ce que
la logique de commande (S) compare la valeur de déclenchement mise en mémoire dans la logique de commande (S), avec une valeur d'horloge variant de manière incrémentale et, en cas de concordance entre la valeur de déclenchement et la valeur de l'horloge, elle déclenche une action,
le contrôleur (C) compare la nouvelle valeur de déclenchement, la valeur de déclenchement mise en mémoire et la valeur d'horloge,
le contrôleur (C), après la comparaison, transmet à la logique de commande (S) la nouvelle valeur de déclenchement pour la mettre en mémoire comme valeur de déclenchement, et en fonction de la comparaison, le contrôleur (C) transmet des informations supplémentaires à la logique de commande (S).

2. Contrôleur (C) selon la revendication 1,
caractérisé en ce que
l'information supplémentaire fait que la logique de commande (S) déclenche immédiatement l'action.

3. Contrôleur (C) selon la revendication 1,
caractérisé en ce que
l'information supplémentaire fait que la logique (S) ne déclenche pas l'action lors de la concordance suivante.

4. Contrôleur (C) selon les revendications 1 à 3,
caractérisé en ce que
l'information relative à la nouvelle valeur de déclenchement se compose de la valeur de déclenchement.

5. Contrôleur (C) selon les revendications 1 à 3,
caractérisé en ce que
- l'information relative à la nouvelle valeur de déclenchement se compose d'une valeur relative, et
- le contrôleur (C) détermine la nouvelle valeur de déclenchement en exploitant la valeur relative et la valeur de déclenchement mise en mémoire.

6. Contrôleur (C) selon l'une des revendications précédentes,
caractérisé en ce qu'
- à la comparaison de la nouvelle valeur de déclenchement, le contrôleur (C) vérifie si la nouvelle valeur de déclenchement se situe dans une plage de tolérance prédéterminée, et
- le contrôleur (C) transmet la nouvelle valeur de déclenchement à la logique de commande (S) pour la mettre en mémoire seulement si la nouvelle valeur de déclenchement se trouve dans une plage de tolérance prédéterminée.
